## Europäisches Patentamt
## European Patent Office
## Office européen des brevets

(19) 

(11) Numéro de publication : **0 098 205 B1**

(12) # FASCICULE DE BREVET EUROPÉEN

(45) Date de publication du fascicule du brevet :
**10.09.86**

(51) Int. Cl.⁴ : **G 02 B   6/38**

(21) Numéro de dépôt : **83401268.4**

(22) Date de dépôt : **20.06.83**

(54) Connecteur de fibre optique pour support coulissant dans une armoire râteller.

(30) Priorité : **25.06.82 FR 8211227**

(43) Date de publication de la demande :
**11.01.84 Bulletin 84/02**

(45) Mention de la délivrance du brevet :
**10.09.86 Bulletin 86/37**

(84) Etats contractants désignés :
**BE DE GB IT NL SE**

(56) Documents cités :
**EP-A- 0 051 519**
**FR-A- 2 335 859**
**US-A- 4 217 030**
**BELL SYSTEM TECHNICAL JOURNAL, vol. 57, no. 6/1, juillet/août 1978, pages 1771-1789, American Telephone and Telegraph CY., USA P.K. RUNGE et al.: "Atlanta fiber system experiment: Demountable single-fiber optic connectors and their measurement on location"**
**PATENT ABSTARCTS OF JAPAN, vol. 4, no. 110, 8 août 1980, page (P-22)592**
**PATENTS ABSTRACTS OF JAPAN, vol. 4, no. 107, 31 juillet 1980, page (P-21)589**

(73) Titulaire : **SOURIAU & Cie (S.A.)**
**9/13, rue du Général Galliéni**
**F-92103 Boulogne-Billancourt (FR)**

(72) Inventeur : **Bouleti, Gilles**
**7, rue Jules Guesde**
**F-93300 Aubervilliers (FR)**
Inventeur : **Thiery, Philippe**
**Résidence de l'Orangerie Avenue de la Jonchère**
**F-78170 La Celle St-Cloud (FR)**

(74) Mandataire : **Chevallier, Robert Marie Georges**
**Société SEDIC 40, rue Victor Basch**
**F-92120 Montrouge (FR)**

Jouve, 18, rue St-Denis, 75001 Paris, France

## Description

La présente invention concerne un dispositif de connexion essentiellement de deux fibres optiques, particulièrement adapté pour les supports comme par exemple les circuits imprimés aptes à coulisser dans des glissières solidaires d'une armoire râtelier que les techniciens désignent sous le vocable « Rack ».

Actuellement, dans toutes les industries il est nécessaire d'utiliser un certain nombre de dispositifs électroniques qui sont composés d'une pluralité de circuits ayant des fonctions différentes.

Aussi, pour pouvoir assurer correctement et facilement la maintenance de ces ensembles électroniques, les différentes fonctions électroniques sont réalisées sur des éléments unitaire-supports comme par exemple des plaquettes de circuit imprimé, ces plaquettes de circuit imprimé étant alors glissées dans des rails ou glissières, solidaires d'armoires râteliers.

Dans ce cas, il est nécessaire que les sorties de ces circuits imprimés puissent être connectées et déconnectées aisément. Pour cela, on a réalisé tout un ensemble de connecteurs à pluralité de fiches du type par exemple mâle ou femelle, qui sont respectivement disposés sur le circuit imprimé et sur l'armoire râtelier.

Ainsi, lorsque le circuit imprimé est placé dans sa glissière et poussé dans l'armoire râtelier, guidé par cette glissière, les deux fiches de connecteurs viennent automatiquement s'emboîter les unes dans les autres, et assurer ainsi les connexions des sorties de ces circuits imprimés.

Jusqu'à présent, on utilisait couramment des ensembles électroniques dont les informations étaient essentiellement constituées par des signaux de puissance électrique, et c'est ainsi que l'on a réalisé tout un ensemble de connecteurs électriques qui permet d'assurer ces fonctions.

Cependant, la technique évoluant, et ayant été démontré tout l'intérêt des informations du type lumineuses, transportées par fibres optiques, il a été nécessaire d'étudier et de réaliser des connecteurs plus particulièrement adaptés à ce genre de signaux d'informations.

D'une façon générale, on sait réaliser la connexion de deux fibres optiques en les aboutant l'une à l'autre au moyen d'un connecteur généralement de type mâle et femelle, pour assurer une bonne continuité dans la transmission de l'information optique.

Cependant, le problème de la connexion des circuits imprimés, comportant au moins une de ces informations, sous forme optique, présente des difficultés car il est absolument nécessaire qu'aucune tension mécanique ne s'effectue au niveau des deux fibres optiques à connecter car, alors, il se produirait, soit un léger désalignement des deux fibres, ou un écartement, ce qui affaiblirait considérablement la qualité de la transmission de l'information optique.

Pour obtenir ainsi une connexion de fibres optiques, plus particulièrement dans le cas des circuits imprimés maintenus dans des armoires râteliers, on a réalisé des types de connecteurs dont au moins une des fiches est disposée sur amortisseur.

Ce genre d'amortisseur est généralement constitué par un support sur lequel est fixée une des fiches de la fibre optique, le support étant relié, soit à l'armoire râtelier, soit au circuit imprimé par un ressort du type « boudin » entourant le connecteur.

Ce système de montage permet d'obtenir la souplesse désirée et d'éviter ainsi les tensions au niveau des fibres optiques. Par contre, il ne permet, avec une bonne sécurité, la connexion, uniquement que dans le cas où le trajet de la fiche mâle est parfaitement défini dans l'axe de la fiche femelle. On a ainsi constaté quelquefois, une fois ces deux fiches connectées, qu'elles n'étaient pas parfaitement sur un même axe, et qu'elles étaient désalignées. Ceci est dû par exemple à la réalisation peu précise des glissières, le léger désalignement produit un affaiblissement de la transmission de l'information optique, comme mentionné ci-dessus.

Le document US-A-4 217 030 décrit un dispositif pour le raccordement d'au moins deux éléments de connecteur à fibres optiques respectivement montés sur un bâti et sur un support coulissant dans ledit bâti, dans lequel chaque élément de connecteur est guidé à sa partie extrême par des tiges de guidage rigides montées dans un manchon élastique. Ce dernier est lui-même contenu dans un logement ménagé pour le recevoir dans un organe porteur rigide. Il en résulte un montage flottant mais dont la liberté dépend du degré possible de déformation ou d'écrasement du manchon dans son logement.

La présente invention a pour but de pallier cet inconvénient et de réaliser un connecteur de fibres optiques pour support coulissant dans des glissières solidaires d'une armoire râtelier, par exemple du type « rack », donnant toute satisfaction afin d'assurer une très bonne continuité dans la transmission de l'information optique sans qu'il y ait de désalignement ou de désaccouplage des deux fibres optiques. Plus précisément, l'invention a pour objet un ensemble tel que défini dans la revendication 1.

Dans un mode de réalisation de l'invention les moyens élastiques de montage flottant sont constitués par des entretoises en caoutchouc réparties autour de l'élément de connexion monté flottant. De préférence, les entretoises en caoutchouc sont au moins au nombre de trois et de préférence au nombre de quatre de longueur sensiblement égale, réparties uniformément autour de l'élément de connexion flottant avec leurs extrémités situées dans des plans parallèles. Chaque entretoise en caoutchouc est montée par ses extrémités opposées sur ledit support correspondant et sur ladite paroi au moyen d'une tête de sertissage.

Avantageusement, les entretoises sont cylindriques.

D'autres caractéristiques et avantages de la présente invention apparaîtront au cours de la description suivante donnée en regard des dessins annexés à titre illustratif mais nullement limitatif, dans lesquels :

la figure 1 représente, vu en perspective, un mode de réalisation d'un connecteur pour support et armoire râtelier selon l'invention,

les figures 2 et 3 représentent, suivant deux vues perpendiculaires un mode de réalisation avantageux de la fiche femelle d'un connecteur selon l'invention, et,

les figures 4 et 5 représentent, en deux vues perpendiculaires, un mode de réalisation avantageux d'une fiche mâle selon l'invention.

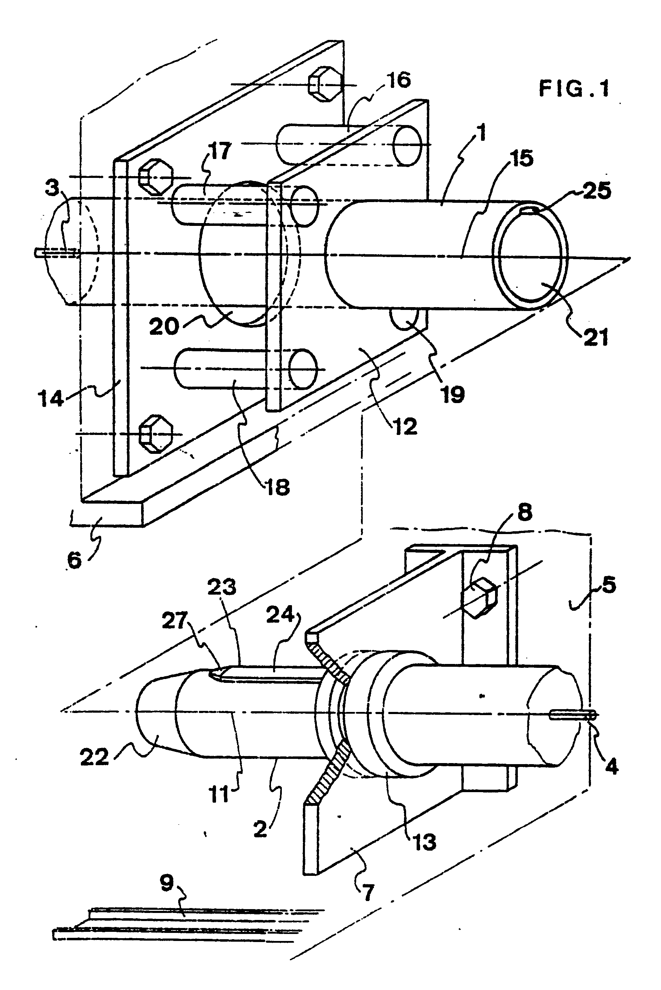

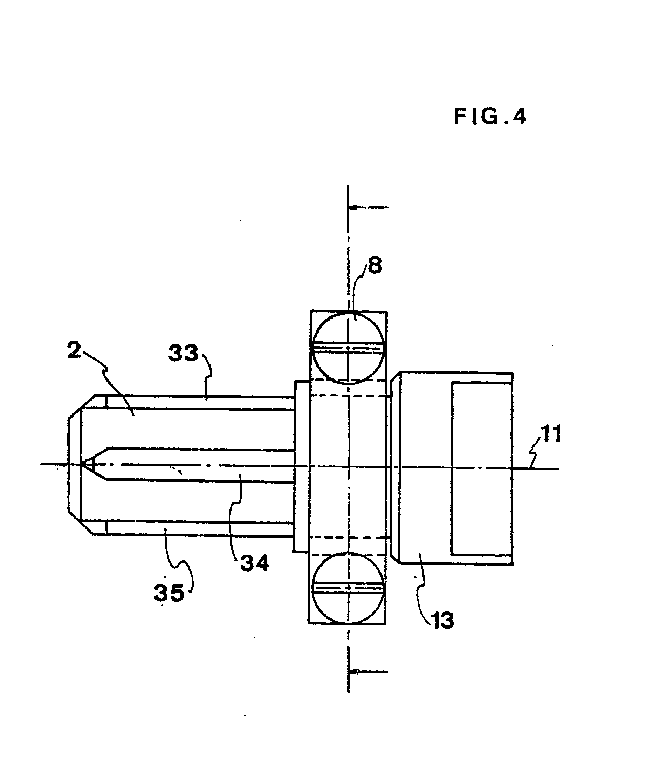

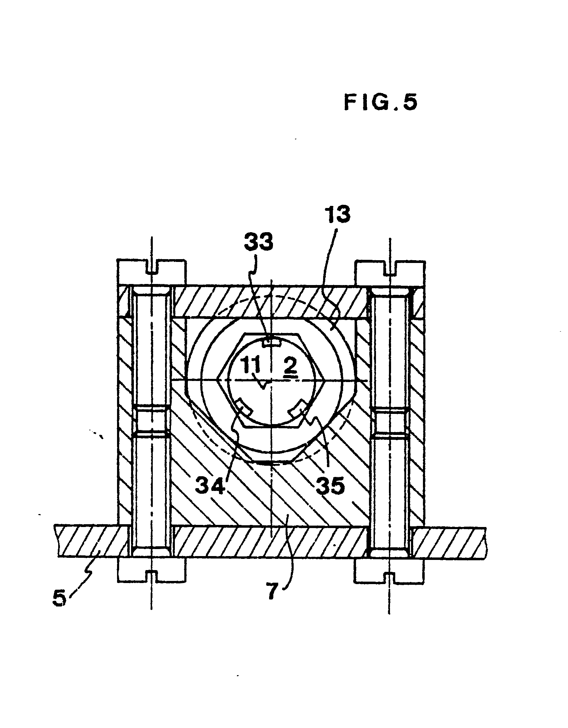

Il est précisé, préalablement à la description du mode de réalisation illustré sur les figures 1 à 5, que, comme celles-ci représentent un seul mode de réalisation, les mêmes références désignent, de ce fait, les mêmes éléments.

Le mode de réalisation illustré sur les figures 1 à 5 concerne un connecteur de fibre optique essentiellement constitué de deux fiches 2 et 1, respectivement mâle et femelle, permettant d'abouter deux fibres optiques 3 et 4.

Ce type de fiche 1 et 2 est connu, et notamment commercialisé par la Demanderesse.

Plus précisément, dans le mode de réalisation illustré, ce connecteur de fibre optique est destiné à relier les deux fibres optiques 3 et 4 dans le cas où un support coulissant, comme par exemple un circuit imprimé 5, doit être relié à une sortie solidaire d'une armoire râtelier 6 connue sous la dénomination « Rack » par les techniciens.

En se reportant plus particulièrement à la figure 1, on constate que la fiche mâle 2 est liée rigidement au circuit imprimé 5, mais que, par contre, la fiche femelle 1 est reliée à l'armoire 6 par des moyens du type parallélogramme déformable, avantageusement de structure particulière, c'est-à-dire présentant un déplacement en X, Y, Z, θ. Cependant, il est bien évident que l'inverse pourrait être réalisé, c'est-à-dire disposer la partie fixe sur l'armoire 6 et la partie de la fiche 1 mobile sur le circuit imprimé.

En ce qui concerne le mode de réalisation illustré sur la figure 1, il comprend : la fiche 2 supportant la fibre 4 disposée solidement sur une plaquette 7 qui est fixée au circuit imprimé 5 par tout moyen 8.

Ce circuit imprimé 5 est apte à se déplacer par coulissement dans une glissière 9 qui est généralement solidaire de l'armoire 6.

La fiche 2 est positionnée sur la plaquette 7 de façon qu'elle ait une position déterminée par rapport à sa plaquette de support 7, et pour que la position de la partie en saillie 24 soit parfaitement définie dans l'espace.

De plus, l'axe général longitudinal 11 de cette fiche 2 est avantageusement parallèle ou sensiblement parallèle à la direction de coulissement du circuit imprimé 5, étant entendu que dans des armoires râteliers, les glissières telles que 9, ne sont pas réalisées avec une très bonne précision.

De plus, le connecteur comprend la fiche femelle 1 qui est fixée solidairement sur une deuxième plaquette 12 par tout moyen, notamment par pincement comme cela a été illustré schématiquement par deux couronnes 13 pour la fiche 2.

Cette plaquette 12 est reliée à l'armoire 6 au moyen d'une embase 14 par des moyens de parallélogramme déformable, de façon que la fiche 1 puisse se mouvoir sensiblement parallèlement à elle-même, et que, dans ce mouvement, son axe 15 reste parallèle à lui-même et à une direction prédéterminée qui sera avantageusement la direction de l'axe de coulissement défini par la glissière 9.

Plus précisément, ces moyens de parallélogramme déformable sont constitués par au moins trois entretoises, avantageusement au nombre de quatre, comme illustré, respectivement 16, 17, 18, 19, réparties uniformément autour de la fiche 1, ces entretoises ayant des longueurs sensiblement égales, de façon que leurs extrémités respectives soient situées dans deux plans parallèles qui sont, en fait, les plans de l'embase 14 et de la plaquette-support 12.

Bien entendu, ces entretoises devront pouvoir pivoter par leurs extrémités respectives de façon que la plaquette 12 puisse se déplacer parallèlement à elle-même sachant que l'embase 14 est fixe par rapport à l'armoire.

Pour faciliter ce déplacement, une ouverture de grand diamètre 20 est réalisée dans l'embase 14 pour permettre le passage de la fiche 1 et son déplacement latéral, du moins d'une certaine quantité. Celle-ci sera déterminée en fonction des jeux maximums possibles, essentiellement dus à la réalisation des glissières, des circuits imprimés, et des positions relatives de l'embase 14 dans l'armoire.

Bien entendu, la position de cette embase 14 dans l'armoire est déterminée notamment par rapport à la glissière 9 et au circuit imprimé 5, pour que, lorsque ce circuit imprimé est glissé dans cette armoire du type râtelier, la fiche mâle 2 puisse se présenter sensiblement en regard de l'entrée 21 de la fiche femelle 1 afin de permettre, de façon connue, un aboutement des deux fibres optiques 3 et 4.

Comme il a été précisé ci-dessus, les glissières et les circuits imprimés n'ont pas une précision de réalisation, et il est impossible, dans un tel montage, que les deux fiches 1 et 2 puissent se trouver parfaitement en regard l'une de l'autre, et puissent pénétrer sans difficulté l'une dans l'autre.

Aussi, l'extrémité, par exemple de la fiche mâle 2, est définie par une portion conique 22, de même que l'extrémité 23 de la partie de guidage en saillie 24, qui est apte à coopérer avec une gorge complémentaire 25 dans la fiche femelle 1, afin de positionner parfaitement les deux fiches 1 et 2, l'une par rapport à l'autre.

Bien entendu, l'entrée 21 de la fiche femelle 1, ainsi que celle de la partie de la gorge 25, peut, elle aussi, être réalisée en partie conique permettant de guider l'entrée de la fiche mâle 2 dans la fiche femelle 1.

Avec un dispositif de connexion comme décrit ci-dessus, il apparaît de toute évidence que, lorsque le circuit imprimé 5 est introduit dans sa glissière et poussée vers le fond de l'armoire râtelier (vers le moyen de connexion mâle), du fait notamment des jeux mentionnés ci-dessus, l'extrémité 22 ne se trouve pas obligatoirement en regard de l'entrée 21.

Cependant, la conicité de cette extrémité est déterminée notamment en fonction des jeux maximums possibles pour que, au moins une partie puisse pénétrer dans l'entrée 21 et, par l'effort exercé sur le circuit imprimé, la fiche femelle 1 se décale latéralement de façon que son axe 15 vienne dans l'alignement de l'axe 11 de la fiche 2 qui est fixe par rapport au circuit imprimé.

Ce déplacement latéral de la fiche femelle 1 est possible du fait du montage par moyen de parallélogramme déformable.

De plus, ce déplacement permet à l'axe 15 de rester toujours parallèle à lui-même, et donc à l'axe 11, comme mentionné précédemment. De ce fait, les deux fiches seront parfaitement alignées, et la légère angulation que l'on trouvait dans les dispositifs de l'art antérieur doit théoriquement disparaître avec ce type de connexion.

Cependant, il est bien évident que les jeux de construction mentionnés précédemment peuvent néanmoins amener à ce que, par exemple, l'axe 15 présente, malgré tout, une légère angulation par rapport à la direction de la glissière 9 et/ou de l'axe 11 de la fiche 2 solidaire du circuit imprimé.

Aussi, avantageusement, ces moyens de parallélogramme comprenant des entretoises pivotant par leurs deux extrémités respectivement par rapport à l'embase 14 et à la plaquette support 12, seront constitués de façon qu'ils présentent une élasticité suivant leurs axes respectifs pour qu'ils puissent, soit se comprimer ou se détendre, et qu'ainsi, l'axe 15 puisse, en plus de ce déplacement parallèle, subir un deuxième déplacement angulaire afin qu'il soit parfaitement parallèle à l'axe 11, et que donc, les deux fibres optiques 3 et 4 soient parfaitement aboutées.

Dans un mode de réalisation avantageux, ces entretoises 16 à 19 seront réalisées par des cylindres, manchons..., en matériau élastique, comme du caoutchouc, afin de présenter une élasticité suffisante en compression et en détente, et malgré tout une certaine rigidité, pour éviter que la plaquette 12 ne se déplace trop facilement par rapport notamment à l'embase 14, par exemple sous l'action de vibrations ou chocs non prévus et parasites.

De plus, du fait de ces manchons, cylindres... en matériau élastique, si par hasard la partie de guidage en saillie 24 n'était pas non plus dans le même plan que celui de la partie en gorge 25, la fiche femelle 1 pourrait subir une légère rotation par rapport à son axe sous l'effet de l'extrémité conique 27 de la partie en saillie de guidage 24.

De toute façon, du fait des caractéristiques en montage, en parallélogramme déformable au moyen d'entretoises élastiques, la fiche femelle 1 peut donc subir des déplacements dans un dièdre de référence de façon connue en X, Y, Z, et aussi en θ, c'est-à-dire une rotation sur lui-même.

Bien entendu, les différents paramètres de définition de la conicité; de l'élasticité, etc., qui puissent permettre le raccord des deux fiches mâle et femelle 2 et 1, seront déterminés expérimentalement en fonction des jeux de montage, réalisation sur les différents modes de construction des supports coulissant dans des glissières, des armoires râteliers du type Rack, etc.

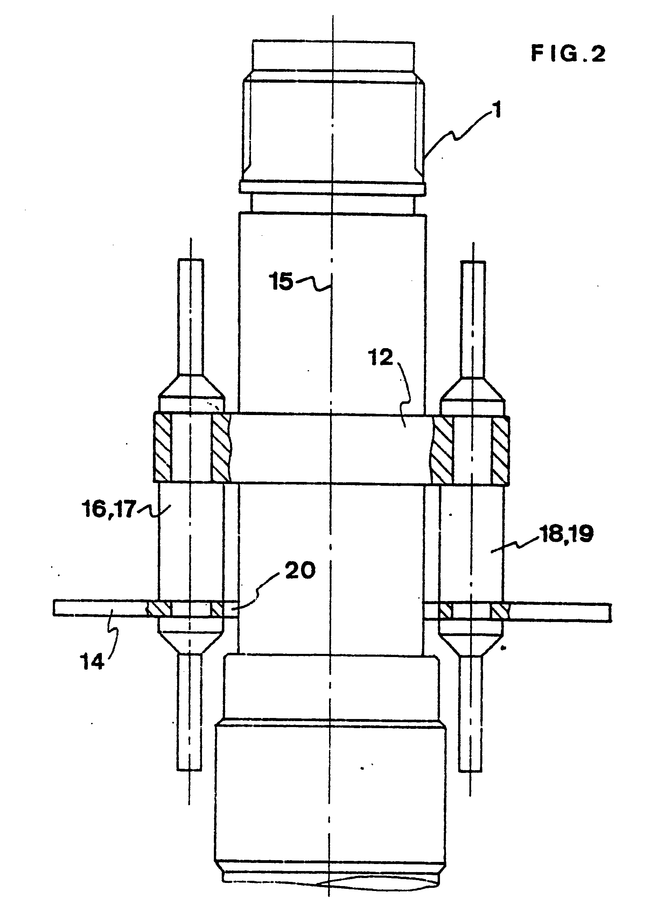

La figure 1, qui a été décrite ci-dessus représente, vu en perspective, un mode de réalisation des moyens de connexion selon l'invention, sous une forme relativement simplifiée ; aussi, les figures 2, 3 et 4, 5 représentent, en deux vues perpendiculaires longitudinales et de face, un mode de réalisation avantageux de deux fiches pouvant entrer dans la réalisation d'un connecteur de fibres, comme décrit ci-dessus.

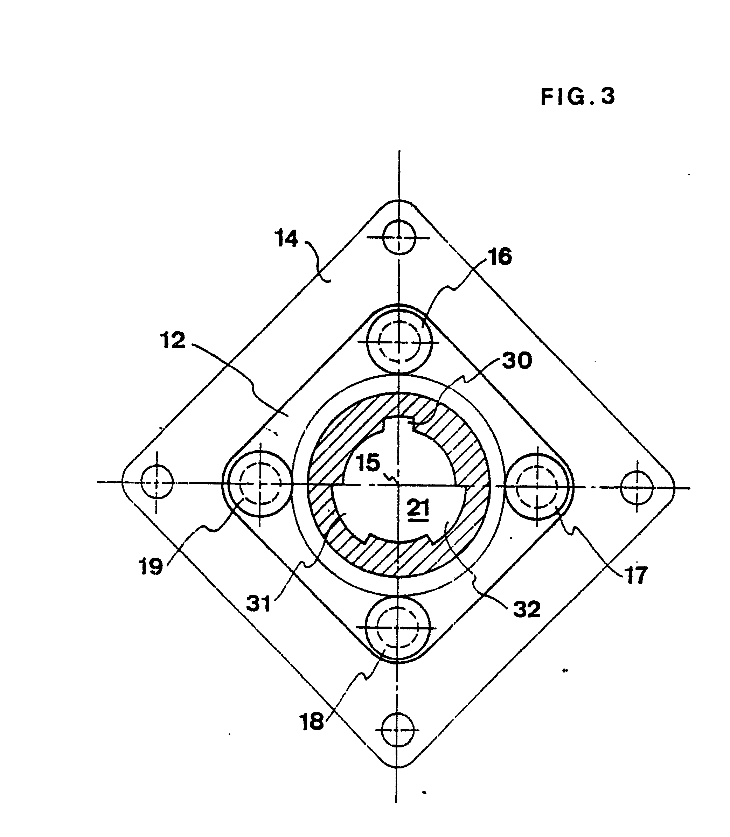

Plus précisément, les figures 2 et 3 illustrent la fiche femelle 1 où il apparaît les entretoises en matériau élastique caoutchouté, qui sont serties respectivement sur l'embase 14 et la plaquette 12, ainsi que l'orifice 20 permettant le débattement de la fiche 1 quand celle-ci subit des déplacements plus particulièrement latéraux, par rapport à son axe 15.

Sur la figure 1, il n'a été illustré qu'une seule rainure de guidage 25, mais il est bien évident qu'avantageusement, comme réalisé par la Demanderesse, les rainures de guidage pourront être au nombre de trois comme illustré sur la figure 3, respectivement les rainures 30, 31, 32 qui pourront coopérer avec les parties en saillie complémentaires 33, 34, 35.

Enfin, il est précisé que l'association de la fiche mâle 2 avec le circuit imprimé 5, sera déterminée pour que, lorsque ce circuit imprimé 5 est placé dans la glissière 9, et que la fiche 2 ait pénétré dans la fiche 1, une légère pression de la couronne 13 s'exerce sur l'embout de la fiche 1. Ceci permet de comprimer constamment les moyens élastiques, c'est-à-dire les entretoises 16, 19 de façon que celles-ci créent une force de réaction pour maintenir constamment l'embout de la fiche 1 plaqué contre la couronne 13.

Ainsi, toutes vibrations ou déplacements parasites du circuit imprimé 5 dans sa glissière, n'aura aucune influence sur la coopération des deux fiches, c'est-à-dire que les deux extrémités des fibres optiques 3 et 4 resteront toujours parfaitement aboutées.

## Revendications

1. Ensemble pour supporter et faciliter le raccordement le long d'un axe de raccordement d'un élément de connexion (2) d'un connecteur, portant une première fibre optique (4) et monté de manière fixe sur un premier support (7, 5) avec un élément de connexion complémentaire (1) de ce même connecteur, portant une deuxième fibre optique (3) et monté de manière flottante à l'aide de moyens élastiques (16-19) sur un deuxième support (14, 6), l'un (5, 7) desdits premier ou second supports étant un support coulissant, dans la direction de l'axe de raccordement, dans des glissières (9) solidaires de l'autre (6, 14) desdits supports qui reste fixe, par exemple une armoire-râtelier, et lesdits deux éléments de connexion (1, 2) ayant des moyens complémentaires (21, 22) de guidage mutuel s'engageant ensemble, caractérisé en ce que ledit élément complémentaire de connexion (1) qui est monté flottant sur ledit deuxième support est fixé à une paroi (12) espacée dudit deuxième support (14) et lesdits moyens élastiques du montage flottant sont constitués par des moyens déformables élastiquement (16 à 19) s'étendant entre ce support (14) et ladite paroi (12) pour supporter celle-ci en porte à faux, avec ledit élément de connexion complémentaire (1) disposé substantiellement coaxialement audit axe de racordement.

2. Ensemble selon la revendication 1, caractérisé en ce que lesdits moyens élastiques de montage flottant sont constitués par des entretoises en caoutchouc (16 à 19) réparties autour de l'élément de connexion complémentaire (1) monté flottant.

3. Ensemble selon la revendication 2, caractérisé en ce que les entretoises en caoutchouc sont au moins au nombre de trois, et de préférence au nombre de quatre, de longueur sensiblement égale, réparties uniformément autour de l'élément de connexion flottant (1) avec leurs extrémités situées dans des plans parallèles.

4. Ensemble selon la revendication 2, caractérisé en ce que chaque entretoise en caoutchouc (16 à 19) est montée par ses extrémités opposées sur ledit deuxième support (14) et sur ladite paroi (12) au moyen d'une tête de sertissage.

5. Ensemble selon la revendication 2, caractérisé en ce que les entretoises (16 à 19) sont cylindriques.

## Claims

1. An assembly for supporting and facilitating the connection along a connection axis of a connection element (2) of a connector bearing a first optical fiber (4) and fixedly mounted on a first support (7, 5), with a complementary connection element (1) of the same connector bearing a second optical fiber (3) and flexibly mounted by resilient means (16-19) on a second support (14, 6), one (5, 7) of said first and second supports sliding in the direction of the connection axis along slides (9) fixed to the other of said supports (6, 14) e. g. a rack which remains fixed, said two connection elements (1, 2) having interfitting complementary mutual guide means (21, 22), the assembly being characterized in that said complementary connection element (1) which is flexibly mounted on said second support is fixed to a wall (12) spaced away from said second support (14), and said resilient flexible mounting means are constituted by elastically deformable means (16 to 19) extending between said support (14) and said wall (12) to provide cantilever support therefor, with said complementary connection element (1) being disposed substantially co-axially with said connection axis.

2. An assembly according to claim 1, characterized in that said resilient flexible mounting means are constituted by rubber spacers (16 to 19) distributed around the flexibly mounted complementary connection element (2).

3. An assembly according to claim 2, characterized in that the rubber spacers are at least three in number, and are preferably four in number, are of substantially equal length, and are uniformly distributed around the flexibly mounted connection element (1) with their ends situated in parallel planes.

4. An assembly according to claim 2, characterized in that each rubber spacer (16 to 19) is mounted at opposite ends to said second support (14) and to said wall (12) by means of respective crimping heads.

5. An assembly according to claim 2, characterized in that the spacers (16 to 19) are cylindrical.

## Patentansprüche

1. Anordnung zum Abstützen und Erleichtern des Anschließens, längs einer Anschlußachse, eines Verbindungselements (2) eines Verbinders, das eine erste optische Faser (4) trägt und starr an einem ersten Support (7, 5) montiert ist, an ein komplementäres Verbindungselement (1) desselben Verbinders, das eine zweite optische Faser trägt und mittels elastischer Mittel (16-19) schwimmend an einem zweiten Support (14, 6) montiert ist, wobei einer (5, 7) der genannten ersten und zweiten Supports ein in Richtung der Anschlußachse in Gleitführungen (9) verschieblicher Support ist, die mit dem anderen (6, 14) der genannten Supports, welcher stationär, beispielsweise ein Einschubschrank ist, verbunden sind, und wobei die genannten beiden Verbindungselemente (1, 2) zueinander komplementäre ineinandergreifende Führungsmittel (21, 22) aufweisen, dadurch gekennzeichnet, daß das genannte komplementäre Verbindungselement (1), das schwimmend an dem genannten zweiten Support montiert ist, an einer von dem genannten zweiten Support (14) beabstandeten Wandung (12) befestigt ist und die genannten elastischen Mittel für die schwimmende Montage von elastisch deformierbaren Mitteln (16-19) gebildet sind, die sich zwischen diesem Support (14) und der genannten Wandung (12) erstrecken, um diese kragträgerartig abzustützen mit dem genannten komplementären Verbindungselement (1) im wesentlichen koaxial zu der genannten Anschlußachse angeordnet.

2. Anordnung nach Anspruch 1, dadurch gekennzeichnet, daß die genannten elastischen Mittel zur schwimmenden Montage von Gummipfosten (16-19) gebildet sind, die um das schwimmend montierte komplementäre Verbindungselement (1) herum verteilt sind.

3. Anordnung nach Anspruch 2, dadurch gekennzeichnet, daß von den Gummipfosten mindestens drei, vorzugsweise vier, im wesentlichen gleicher Länge vorhanden sind, gleichförmig verteilt um das schwimmende Verbindungselement (1) und mit ihren Enden in parallelen Ebenen angeordnet.

4. Anordnung nach Anspruch 2, dadurch gekennzeichnet, daß jeder Gummipfosten (16-19) mit seinen einander abgekehrten Enden an dem genannten zweiten Support (14) und an der genannten Wandung (12) mittels eines Einsprengkopfes montiert ist.

5. Anordnung nach Anspruch 2, dadurch gekennzeichnet, daß die Pfosten (16-19) zylindrisch sind.

0 098 205

FIG.1

0 098 205

FIG.2

2

FIG.3

FIG.4

FIG.5